# EUROPEAN PATENT APPLICATION

(11) **EP 1 788 798 A1**
(43) Date of publication of application: **23.05.2007**
(21) Application number: 06016811.9
(22) Date of filing: 11.08.2006
(51) Int. Cl.: H04N 5/00, H04N 5/44, H04N 7/173, G06F 3/048

(54) **User interface method, system, and device in multitasking environment**

(30) Priority: 30.08.2005 KR 20050080329
(71) Applicant: Samsung Electronics Co., Ltd., Suwon-si, Gyeonggi-Do (KR)
(72) Inventor: Lee, Si-Hyoung, Anyang-si Gyeonggi-do (KR); Park, Nam-Choon, Banghwa-dong Gangseo-gu Seoul (KR); Park, Yi-Sak, Yeongdeungpo-gu Seoul (KR); Kang, Jung-Won, Yangcheon-gu Seoul (KR); Kim, Ji-Hoon, Gangnam-gu Seoul (KR); Shin, So-Young, Hanam-si Gyeonggi-do (KR)
(74) Representative: Lang, Johannes

(57) **Abstract**

In a user interface method, system and device in a multitasking environment, all applications being executed are displayed. Movement between applications being displayed and selection of the applications can be performed in response to a request from a user, such that the user can easily use applications being executed currently. Currently selected applications do not block other applications, and the user is able to simultaneously view all applications. The sizes and positions of the display areas assigned to the applications are determined based on stored feature values of each respective application, the entire display screen area being partitioned based on the feature values. The system comprises a set-top box and a user terminal, or a controller and a storage unit.

## Description

### BACKGROUND OF THE INVENTION

### Technical Field

The present invention relates to a user interface method, system and device in a multitasking environment.

### Related Art

A user interface is indispensable in all devices that operate in response to a request from a user. The user interface has been developed to enhance user convenience. The user interface displays user-input information and a corresponding operation status on a display means of the device so that a user can immediately view his or her selection and corresponding results. That is, each time the user makes a specific selection, the user interface displays a corresponding screen on the display means.

However, the user interface can display only one functional screen at a time. Accordingly, a partitioned screen has been used to display several contents. This screen, however, is a mere partitioned screen.

This arrangement is somewhat inconvenient since one functional screen is displayed at a time. Examples of inconvenience in a multi-function set-top box capable of simultaneously performing several functions will be described.

Such inconvenience is prominent in multi-function devices. Some of the problems described below are found in all conventional devices, not only those displaying only one screen in response to all user inputs.

Multi-function set-top boxes are realized by combining several advanced technologies, including communications technology. Multi-function set-top boxes have several functions, including a communication function, an entertainment function, and a scheduling function, as well as broadcast or video on demand (VoD) receiving functions. These functions are associated with various types of applications. Multi-function devices having two or three functions have been developed in several fields, however no such device has as many functions as a multi-function set-top box. Multi-function set-top boxes are and will be widely used due to their convenience.

As mentioned above, multi-function set-top boxes have several functions, and can perform a single function or can simultaneously perform a plurality of functions depending on a user's selection. When a plurality of functions are performed simultaneously, they may be performed independently or in correlation with one another. Examples of simultaneous performance of a plurality of functions using a multi-function set-top box include making a call while viewing a broadcast program, checking a schedule while making a call, and retrieving media files to be transferred to others while making a telephone call. While these are all examples of simultaneous performance of two applications, multi-function set-top boxes can simultaneously perform three or more applications.

Multi-function set-top boxes using a conventional display method, system and device are inconvenient to users for the reasons given below.

In the conventional display method, system and device, one application is ended and then another application is started, or one application is displayed and then another application is displayed. Thus, in order to execute or display one application while executing another application, a user should end the executed application and move to an upper level menu to select the new application or a corresponding display menu.

Movement between applications being executed is performed using a menu or list of applications. A user has to repeatedly move through the menu to select other applications.

Other applications may be blocked by a currently selected application. Accordingly, the user cannot simultaneously view two associated screens when executing two associated applications. For example, in the case where the user checks a schedule while viewing a television program, the schedule screen blocks the television program screen.

These problems lower user convenience, and thus cause an inconvenience to the user.

### SUMMARY OF THE INVENTION

It is an object of the present invention to provide a user interface method, system and device in a multitasking environment, which method, system and device are capable of improving user convenience.

It is another object of the present invention to provide a user interface method, system and device in a multitasking environment, which method, system and device are capable of facilitating movement between a plurality of applications operating simultaneously.

It is still another object of the present invention to provide a user interface method, system, and device in a multitasking environment, which method, system and device are capable of preventing a currently selected application screen from blocking other application screens.

It is yet another object of the present invention to provide a user interface method, system, and device in a multitasking environment, which method, system and device are capable of enabling users to view screens of a plurality of associated applications.

According to an exemplary embodiment of the present invention, a user interface method in a multitasking environment comprises: receiving a request to display a representative screen; determining applications to be displayed on the requested representative screen; determining the sizes and positions of display areas to be assigned to the determined applications based on a feature value of each of the applications; and displaying the respective determined applications on the display areas of the display means having the determined sizes and positions.

Determining the sizes and positions of display areas to be assigned to the determined applications preferably comprises partitioning an entire display area according to the feature value of each application, and assigning the resulting parts to the applications.

The feature value is set based on at least one of user preference for an application, frequency of use of an application, and a display characteristic of an application.

The size and position of the display area may be input when there is a request to display the representative screen.

The method further comprises selecting, in response to a request from a user to move between the displayed applications, an application that is adjacent to a currently selected application.

The method further comprises, when a specific application displayed on the representative screen is to be selected in response to a request from the user, simultaneously displaying the contents of other applications currently being executed on the display areas.

The method further comprises displaying a display area of the selected application as the largest area.

According to another exemplary embodiment of the present invention, a user interface system in a multitasking environment comprises: a set-top box which is responsive to receipt of a request to display a representative screen for assigning display areas for displaying a plurality of applications executed currently according to a feature value of each application, for composing the representative screen so that applications are displayed on the respective assigned display areas, and for selecting the applications displayed on the representative screen in response to a user input; and a user terminal for requesting the set-top box to display the representative screen, for receiving the representative screen from the set-top box as a response, and for displaying the representative screen.

The user terminal is preferably at least one of a remote controller, a portable phone, and a personal digital assistant (PDA).

The set-top box preferably partitions an entire display area according to the feature value of each application, and assigns each of the resulting parts to the applications to compose the representative screen.

Preferably, the set-top box simultaneously displays the contents of other applications currently being executed on the display areas when a specific application displayed on the representative screen is to be selected in response to a request from the user.

The representative screen may display currently selected applications as icons.

According to still another exemplary embodiment of the present invention, a user interface system in a multitasking environment comprises: a set-top box which is responsive to receipt of a request to display a representative screen for assigning display areas for displaying a plurality of applications currently executed according to a feature value of each application, for composing the representative screen so that respective applications are displayed on the assigned display areas, and for selecting the applications displayed on the representative screen in response to a user input; and a user terminal which connects to the set-top box over a communication network for requesting the set-top box to display the representative screen, for receiving the representative screen from the set-top box as a response, and for displaying the representative screen.

According to yet another exemplary embodiment of the present invention, a user interface device in a multitasking environment comprises: a controller which is responsive to receipt of a request to display a representative screen from a user for assigning display areas for displaying a plurality of applications executed currently according to a feature value of each application, for composing the representative screen so that respective applications are displayed on the assigned display areas, for providing the representative screen to a display means, and for selecting the applications displayed on the representative screen in response to a user input.

Preferably, the set-top box simultaneously displays the contents of other applications currently being executed on display areas when a specific application displayed on the representative screen is to be selected in response to the request from the user.

The request to display the representative screen is preferably activated by selection of function keys of a user terminal.

The display areas assigned to the applications are preferably set so as not to overlap one another.

Preferably, the device further comprises a storage unit for storing the feature values of the applications.

The display areas assigned to the applications may be determined in response to a user input.

The controller may select the applications when a direction key or a jog dial is selected.

The controller may apply at least one of screen inversion, brightness adjustment, and size adjustment to the display area of the selected application.

When a specific application displayed on the representative screen is to be selected in response to the operation of the direction key or the jog dial, the controller may simultaneously display the contents of other applications currently being executed on display areas.

The controller may select an application that is adjacent to a currently selected application in response to the selection by the direction key or the jog dial.

The controller may display the selected application on a larger display area than other applications.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings, in which like reference symbols indicate the same or similar components, wherein:
FIG. 1 illustrates examples of a display screen of a user interface;
FIG. 2 is a block diagram of a user interface device according to an exemplary embodiment of the present invention;
FIGS. 3A, 3B and 3C illustrate examples of a display screen in a user interface according to an exemplary embodiment of the present invention;
FIGS. 4A and 4B show movement between applications according to an exemplary embodiment of the present invention; and
FIG. 5 is a flowchart illustrating processes performed in a multi-function set-top box having a user interface according to an exemplary embodiment of the present invention.

### DETAILED DESCRIPTION OF THE INVENTION

The present invention will now be described more fully with reference to the accompanying drawings, in which exemplary embodiments of the invention are shown.

As described above, the present invention provides a user interface method, system and device in a multitasking environment which method, system and device are capable of assigning a display area to each application being executed, displaying applications on the assigned areas, and freely moving between the displayed applications using a move key, thus enhancing user convenience. Hereinafter, the user interface method, system and device in a multitasking environment according to exemplary embodiments of the present invention will be described in greater detail.

In the present invention, a screen that has partial areas for displaying applications is called a representative screen. The representative screen may be provided upon request. It is assumed in the description that the representative screen is immediately provided, irrespective of current operation of a set-top box, when there is a request to provide the representative screen.

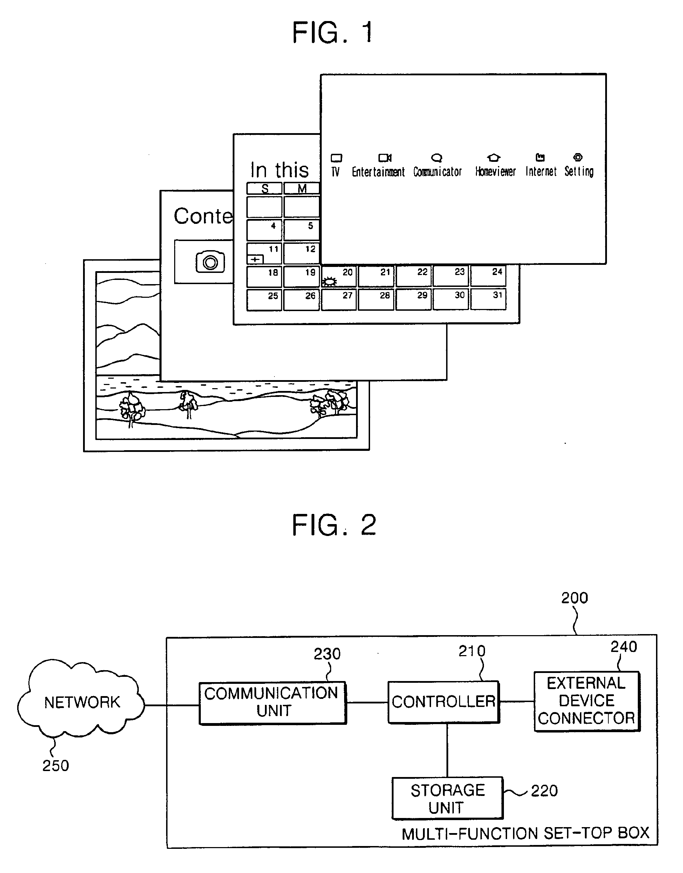

FIG. 1 illustrates examples of a display screen of a user interface. As seen therein, four applications are displayed, each blocking the display of the others, thereby causing an inconvenience to the user.

FIG. 2 is a block diagram of a multi-function set-top box according to an exemplary embodiment of the present invention.

Referring to FIG. 2, the multi-function set-top box used in a multitasking environment is represented by a user interface device 200 which includes a controller 210, a storage unit 220, a communication unit 230, and an external device connector 240.

The controller 210 controls the storage unit 220, the communication unit 230, and the external device connector 240 of the multi-function set-top box 200. In particular, if there is a request to display a representative screen, the controller 210 assigns areas to a plurality of currently executed applications to be displayed depending on feature values of the applications, composes the representative screen so that each of the applications is displayed in its assigned area, provides the representative screen to the display means, and allows applications displayed on the representative screen to be selected by user input. Selection of applications that are executed in response to a user input will be described. The controller 210 allows all applications that can be executed by the set-top box 200, as well as a currently executed application, to be displayed.

The position or size of the areas where respective applications will be displayed can be determined using various conditions, as well as the above-mentioned feature value of the application. The size and position information of display areas for applications, determined based on several conditions, is called display information. The size and position of the display areas may be determined by a user input when there is a request to display a representative screen, or by conditions. The storage unit 220 stores predefined display information, reference information having a feature value, and the like. The storage unit 220 may further store various information, including schedule information, electronic program guide (EPG) information used to receive and view a broadcast program, and content information. The communication unit 230 can connect to the network 250 and perform various communication functions, such as Internet service, E-mail service, voice over Internet protocol (VoIP)-based voice or visual telephone service, and data communication service such as multimedia broadcasting content transmission.

The external device connector 240 is used to connect various external devices to the set-top box 200. Examples of such external devices include external storage devices, digital cameras, MP3 players, digital versatile discs (DVDs), personal video recorders (PVRs), and computers. The multi-function set-top box 200 is able to read data from the external devices, which are connected to the multi-function set-top box 200 via the external device connector 240, in order to use or store the data.

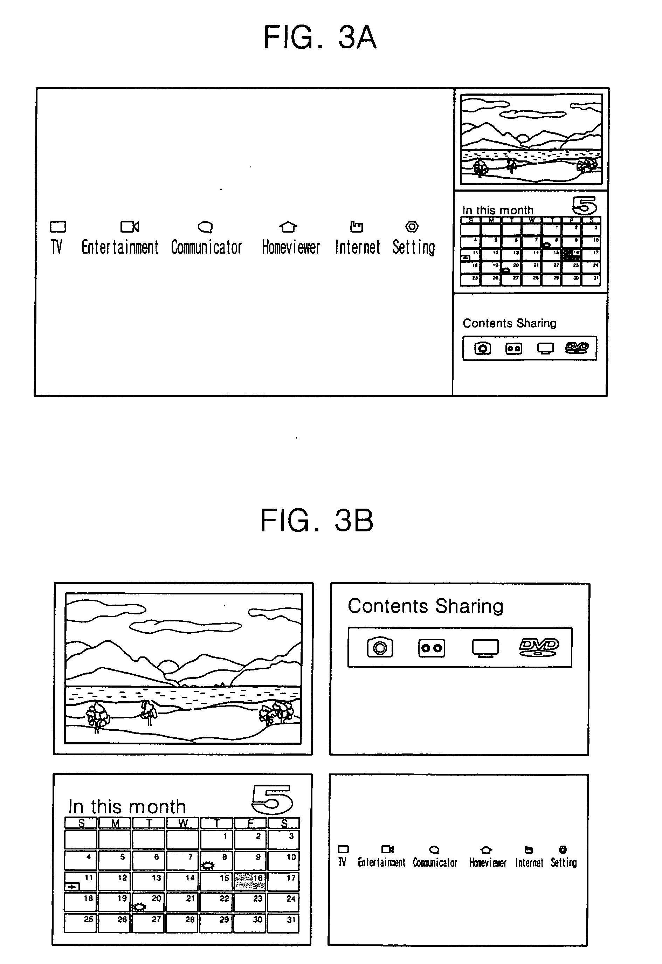

In the multi-function set-top box 200, the controller 210 composes a representative screen and provides the screen to the display means (not shown) upon request, as described above. The representative screen will be described with reference to FIGS. 3A thru 3C.

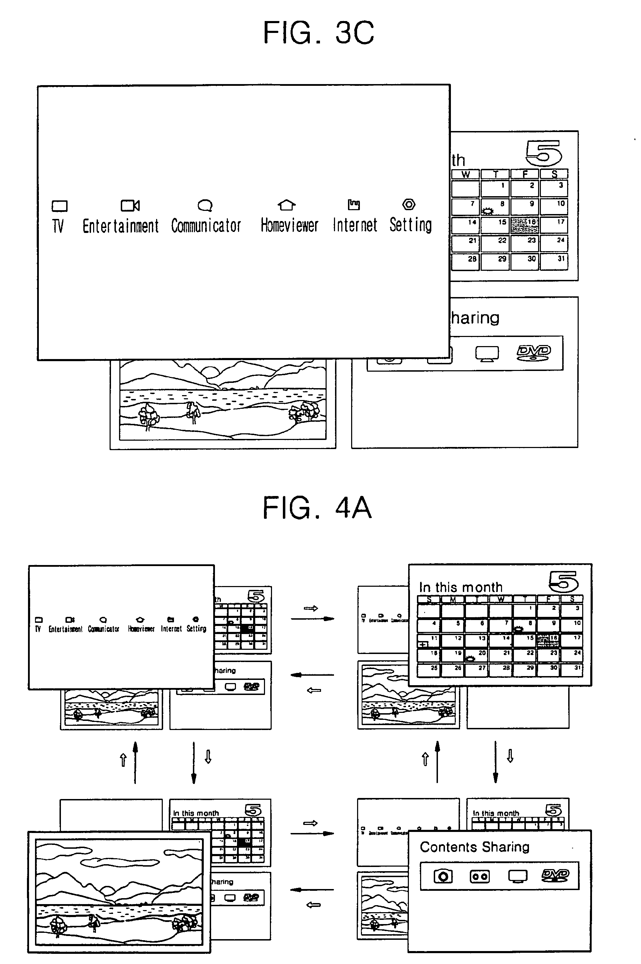

FIGS. 3A, 3B and 3C illustrate examples of a representative screen displayed on display means of a multi-function set-top box according to an exemplary embodiment of the present invention

FIG. 3A is an example in which applications are assigned and displayed on different-sized display areas, and FIG. 3B is an example in which applications are assigned and displayed on display areas having the same size. FIG. 3C is an example in which applications are assigned display areas having the same size, except that a current selected application is activated and displayed on a larger display area than the other applications.

One of the display forms may be selected by the user or may be determined by a setting of the multi-function set-top box 200. The representative screen may have a composition that is determined based on the setting of the multi-function set-top box 200. For example, the display size and position of respective applications may be determined based on an absolute reference or a relative reference. When the display size and position are determined based on the relative reference, an application being used by the user may be displayed in the largest size at the most noticeable position when there is a request to provide the representative screen.

Other references may be used to determine the display size and position of the applications. For example, an application feature value set based on user preference for each application, frequency of use of each application, and a display characteristic for each application may be used to determine the display size and position of the applications. The feature value may be set based on a scenario of a user application. The feature value may be set so that an application having higher user preference and frequency of use than other applications is assigned a larger display area than the other applications.

The size and position of the display areas assigned according to the absolute reference may be determined based on basic display information set in each application so that, when there is a request to display the representative screen, user environment is not considered.

The display means may be a television that is connected to the multi-function set-top box 200.

Movement between applications displayed according to the present invention will now be described.

Function control, such as a request to provide a representative screen, movement between applications, and the like can be performed using function keys (not shown) of multi-function set-top box 200 or function keys of a user terminal (not shown), which is a control device corresponding to the set-top box 200. Examples of the user terminal include a remote controller, a portable phone, and a personal digital assistant (PDA).

The remote controller can connect to the multi-function set-top box 200 using wireless local area communication technology, such as infrared communication and Bluetooth. Since the multi-function set-top box 200 has a communication function, the remote controller of the multi-function set-top box 200 will be able to have a communication terminal function, as well as a function of controlling the set-top box 200. The set-top box 200 may further comprise a remote controller (not shown) for receiving a control signal from the remote controller. A portable phone, PDA, and the like may be able to connect to the set-top box 200 over communication network 250, and to control the set-top box 200. Alternatively, a user terminal having both a remote controller function and a portable communication terminal function may be used. As a further alternative, a user terminal for controlling the set-top box 200 through a wired connection may be used.

According to an exemplary embodiment of the present invention, a function key (hereinafter, referred to as "home key") separately defined for a representative screen request may be added to the set-top box 200 or the remote controller. The set-top box 200 composes the representative screen and displays it, regardless of an operation being performed, only if the home key is selected.

In this case, when the representative screen is displayed, the controller 210 controls a prompt to be positioned on a specific one of the applications displayed on the representative screen, and controls another application to be selected starting at the application on which the prompt is positioned. For example, the controller 210 can control the prompt to be positioned on a top left application when the representative screen is initially displayed. The user can select another application by moving the prompt to a display area of the application using direction keys or a jog dial. In this case, the controller 210 may execute an application upon application selection, or upon receipt of a separate command after application selection, depending on the settings of the system.

The controller 210 may also notify a user of the application selection by inverting the display area of the selected application, changing the brightness of the display area of the application, or changing the size of the display area of the application.

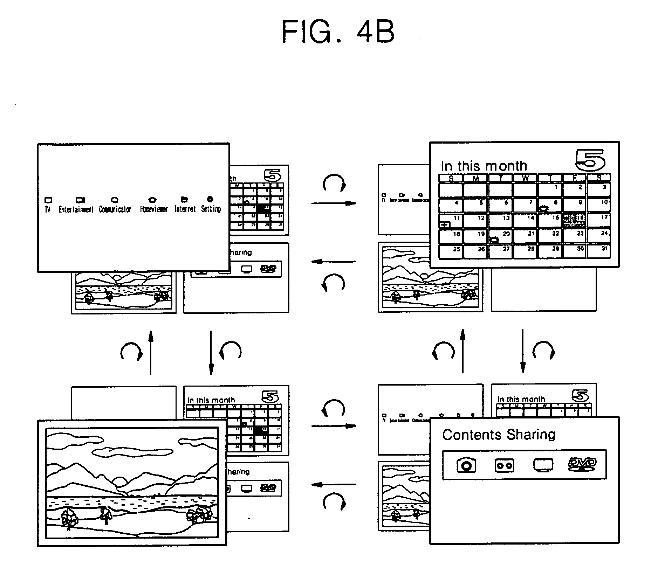

FIGS. 4A and 4B show movement and selection between applications according to an exemplary embodiment of the present invention.

FIG. 4A shows an example in which direction keys are used for application movement, and FIG. 4B shows an example in which a jog dial is used for application movement. In FIGS. 4A and 4B, larger boxes indicate a currently selected application.

In moving between applications, a selected application may be displayed larger than other applications, as illustrated in FIG. 3C. Also, the selected application may be inverted or may have a brightness different from those of the other applications. According to an exemplary embodiment of the present invention, movement between applications may be performed using movement keys, such as direction keys or a jog dial, without exiting a current application to select other applications and without separate selection or operation of a confirmation key.

In the present invention, a television may not be available to a user as a display means, for example, in the case where the user desires to control the set-top box 200 while away from home or while inside a room having no television. In this case, the remote controller held by the user may be used as the display means. Of course, the remote controller should comprise a display unit.

An exemplary embodiment of the present invention, in the case where the user is in a room having no television, will be described first.

The user who, while at home, cannot use a television as a display means transmits, to the multi-function set-top box 200, a signal indicating that he or she will use his or her remote controller as the display means. In response to receipt of the signal, the set-top box 200 transmits data for outputting the above-described representative screen to the remote controller. The set-top box 200 composes the representative screen so that applications, other than a currently selected application, are displayed as icons, and only the currently selected application is displayed with its content. This can increase legibility when a small-sized liquid crystal display (LCD) of the remote controller is used as the display means. When the applications are displayed as icons, movement between applications can be performed using nothing but direction keys or a jog dial without performing a selection process.

An example in which the user is outside the home, according to an exemplary embodiment of the present invention, will now be described.

In this case, the remote controller should include communication means to connect to the multi-function set-top box 200 via communication network 250.

This example includes two cases.

First, the set-top box 200 composes a representative screen for provision to the remote controller. In response to receipt of a request from the remote controller to provide a representative screen, the set-top box 200 composes the representative screen by considering an application which the set-top box 200 provides to the remote controller and an application executed by the set-top box 200 itself, and provides the representative screen. Thus, the set-top box 200 should be able to acquire information about applications currently being executed by the remote controller. The remote controller may transmit, to the set-top box 200, the information about the applications being currently executed by the remote controller, together with the request to provide the representative screen. The remote controller receives the representative screen from the set-top box 200 as a response, and displays the representative screen on its display unit.

Second, the remote controller composes a representative screen. When a hot key is selected, the remote controller composes the representative screen by considering an application provided by the set-top box 200 and an application currently being executed by the remote controller, and outputs the representative screen to its display unit.

A method for display in a multi-function set-top box which corresponds to the apparatus having the above-described functions according to the present invention will be described.

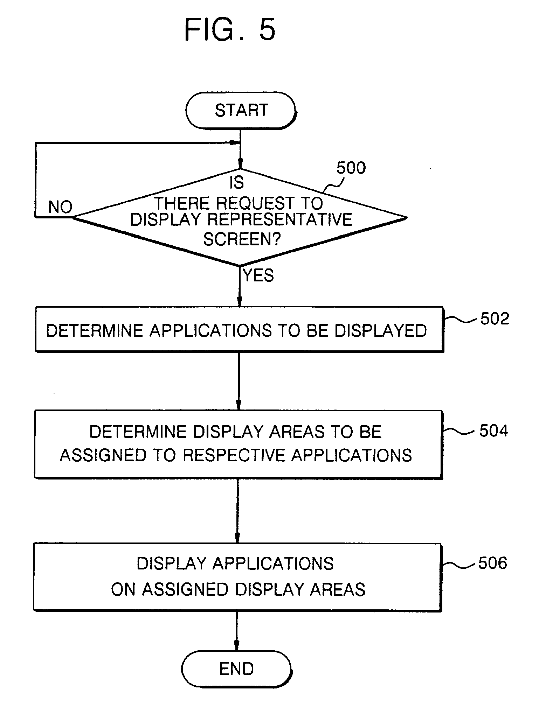

FIG. 5 is a flowchart illustrating a method for display in a multi-function set-top box.

Referring to FIG. 5, in response to receipt of a request to display a representative screen (S500), the multi-function set-top box 200 determines applications to be displayed on the requested representative screen (S502), determines the sizes and positions of display areas to be assigned to the determined applications (S504), and displays the applications on the respective display areas of a display means of the set-top box 200 having the determined sizes and positions (S506).

In response to a request to move between the applications displayed on the representative screen, the multi-function set-top box 200 may select an application that is adjacent to a currently selected application.

According to the present invention as described above, when screens for various applications, such as television, communication, entertainment and networking, need to be displayed on a limited display means, the screens can be easily arranged so that a user can view not only the selected application screen but also the screens of all applications being executed.

The present invention as described above is applicable to any device that simultaneously executes a plurality of applications, including the multi-function set-top box.

According to the present invention described above, it is possible to simultaneously display all applications being simultaneously executed, to facilitate movement between the applications, and to simultaneously view screens of a plurality of associated applications without other application screens being blocked by a current selected application screen. Thus, user convenience can be enhanced.

While the present invention has been described with reference to exemplary embodiments thereof, it will be understood by those skilled in the art that various changes in form and detail may be made therein without departing from the scope of the present invention as defined by the following claims.

## Claims

1. A user interface method in a multitasking environment, said method comprising the steps of:
receiving a request to display a representative screen;
determining applications to be displayed on the requested representative screen;
determining sizes and positions of display areas to be assigned to the determined applications based on a feature value of each of the applications; and
displaying respective determined applications on respective ones of the display areas having the respective determined sizes and positions.

2. The method according to claim 1, wherein the step of determining the sizes and positions of display areas to be assigned to the determined applications comprises partitioning an entire display area according to the feature value of each respective application, and assigning a respective display area part to said each respective application.

3. The method according to claim 1, wherein the feature value is set based on at least one of user preference for an application, frequency of use of the application, and a display characteristic of the application.

4. The method according to claim 1, wherein the sizes and positions of the display areas are inputted when there is a request to display the representative screen.

5. The method according to claim 1, further comprising the step of selecting, in response to a request from a user to move between the displayed applications, an application which is adjacent to a currently selected application.

6. The method according to claim 5, further comprising the step of, when a specific application displayed on the representative screen is to be selected in response to the request from the user, simultaneously displaying contents of other applications currently being executed on the display areas.

7. The method according to claim 1, further comprising the step of displaying a selected application on a display area having a largest area.

8. A user interface system in a multitasking environment, said system comprising:
a set-top box responsive to receipt of a request to display a representative screen for assigning display areas for displaying a plurality of applications currently executed according to a feature value of each application, for composing the representative screen so that applications are displayed on respective assigned display areas, and for selecting the applications for display on the representative screen in response to a user input; and
a user terminal for requesting the set-top box to display the representative screen, for receiving the representative screen from the set-top box as a response, and for displaying the representative screen.

9. The system according to claim 8, wherein the user terminal comprises at least one of a remote controller, a portable phone, and a personal digital assistant (PDA).

10. The system according to claim 8, wherein the set-top box partitions an entire display area according to said feature value of said each application, and assigns each of a plurality of display area parts to a respective application so as to compose the representative screen.

11. The system according to claim 8, wherein the set-top box simultaneously displays contents of other applications currently being executed on the display areas when a specific application displayed on the representative screen is selected in response to the request from the user.

12. The system according to claim 8, wherein the representative screen displays currently selected applications as icons.

13. A user interface device in a multitasking environment, said device comprising:
a controller responsive to receipt of a request from a user to display a representative screen, for assigning display areas for displaying a plurality of applications currently executed according to a feature value of each application, for composing the representative screen so that applications are displayed on respective assigned display areas, for providing the representative screen to a display unit, and for selecting the applications for display on the representative screen in response to a user input.

14. The device according to claim 13, wherein said controller partitions an entire display area according to said feature value of said each application, and assigns each of a plurality of display area parts to a respective application so as to compose the representative screen.

15. The device according to claim 13, wherein said controller simultaneously displays contents of other applications currently being executed on the display areas when a specific application displayed on the representative screen is selected in response to the request from the user.

16. The device according to claim 13, wherein the request to display the representative screen is activated by selection of function keys of a user terminal.

17. The device according to claim 13, wherein the respective assigned display areas are set so as not to overlap each another.

18. The device according to claim 13, further comprising a storage unit for storing the feature values of the applications.

19. The device according to claim 13, wherein the respective assigned display areas are determined in response to the user input.

20. The device according to claim 13, wherein the controller selects one of the applications when one of a direction key and a jog dial is selected.

21. The device according to claim 20, wherein the controller applies at least one of screen inversion, brightness adjustment and size adjustment to the display area of said selected one of the applications.

22. The device according to claim 20, wherein, when a specific application displayed on the representative screen is selected in response to operation of said one of the direction key and the jog dial, the controller simultaneously displays contents of other applications currently being executed on said assigned display areas.

23. The device according to claim 20, wherein the controller selects an application which is adjacent to a currently selected application in response to the selection by said one of the direction key and the jog dial.

24. The device according to claim 20, wherein the controller displays said selected one of the applications on a display area which is larger than the display areas of other applications.
